# EUROPEAN PATENT SPECIFICATION

(11) **EP 1 959 095 B1**
(45) Date of publication and mention of the grant of the patent: **28.10.2015**
(21) Application number: 08250537.1
(22) Date of filing: 14.02.2008
(51) Int. Cl.: F01D 5/00

(54) **Dimensional restoration of stator inner shrouds**
Dimensionale Wiederherstellung von Statorkopfplatten
Restauration dimensionnelle de carénage interne de stator

(30) Priority: 14.02.2007 US 706083
(43) Date of publication of application: 20.08.2008
(73) Proprietor: United Technologies Corporation, Hartford, CT 06101 (US)
(72) Inventor: Moor, James J., New Hartford, CT 06057-4123 (US); Rose, William M., W. Brookfield, MA 01085 (US); Smith, Darren M., Andover, CT 06232-1720 (US)
(74) Representative: Leckey, David Herbert

(56) References cited:
- WO-A2-2005/030429
- US-A- 5 889 254
- US-A1- 2007 045 250
- US-A1- 2007 111 119

## Description

### BACKGROUND

The present invention relates to dimensional restorations of aerospace components. In particular, the present invention relates to methods of dimensionally restoring inner shrouds of stator vane assemblies with the use of laser systems.

The compressor stages of a gas turbine engine typically include assemblies of stator vanes and rotatable blades, where each stator vane assembly includes multiple airfoil vanes disposed radially between an inner shroud and an outer shroud. During operation, the inner shrouds of the stator vane assemblies (referred to as stator inner shrouds) are typically subjected to abrasive conditions, such as wear damage from spring clips located adjacent to the inner diameter (ID) surfaces of the stator inner shrouds. Over extended periods of operation, such wear damage typically requires restoration to ensure proper sealing between the stator inner shrouds and air seals.

The wear-damaged regions in the ID surfaces of the stator inner shrouds typically have irregular shapes and are located at irregular locations along the ID surfaces. As such, automated techniques for restoring such wear-damaged regions are not practical.

One technique used to repair wear damage to the ID surfaces of stator inner shrouds involves gas tungsten arc welding (GTAW). However, the heat generated by GTAW may undesirably distort the ID surfaces of the stator inner shrouds. Such distortions may cause the ID surfaces to fall outside of their tight dimensional tolerances, thereby requiring further restoration steps or discarding the inner shrouds. Thus, there is a need for improved processes for dimensionally restoring damaged ID surfaces of stator inner shrouds.

A method of restoring a stator inner shroud with the features of the preamble of claim 1 is disclosed in WO 2005/030429. A method for manually laser welding metallic parts is disclosed in US 2007/0045250.

### SUMMARY

The present invention provides a method of restoring a stator inner shroud in accordance with claim 1.

The method relates to dimensionally restoring a damaged portion of an ID surface of a turbine engine inner shroud. The method includes manually feeding successive portions of a filler material to the damaged portion, and laser welding the damaged portion with a laser beam and the filler material.

### BRIEF DESCRIPTION OF THE DRAWINGS

FIG. 1 is a flow diagram of a method for dimensionally restoring a stator inner shroud with a laser system.
FIG. 2 is a perspective view of a portion of a stator vane assembly being dimensionally restored with a laser system, where the stator vane assembly includes multiple stator inner shrouds.

### DETAILED DESCRIPTION

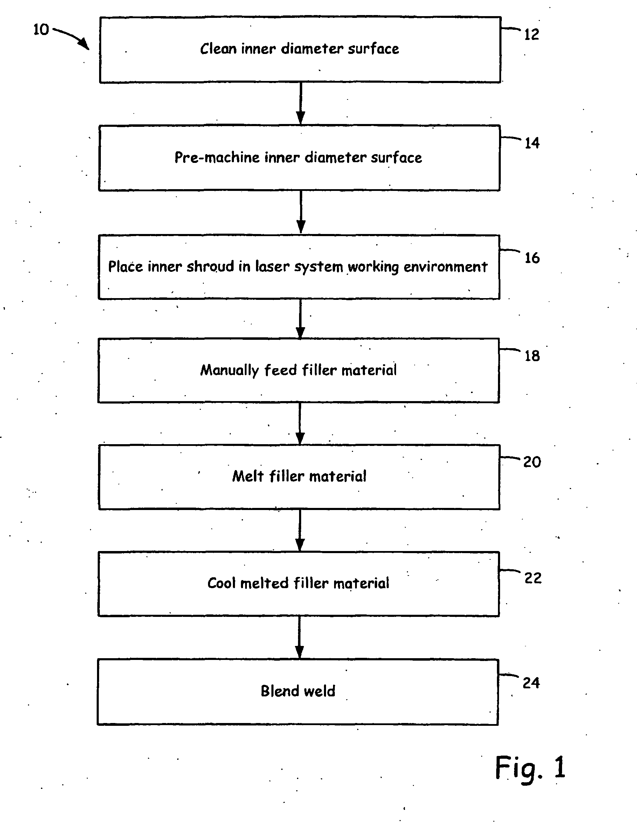

FIG. 1 is a flow diagram of method 10 for dimensionally restoring an ID surface of a stator inner shroud, where the ID surface contains at least one damaged region. Examples of damaged regions that may be restored with method 10 include pockets, cracks, and other similar features worn or cut into the ID surface. Method 10 is particularly suitable for restoring wear-damaged regions caused by spring clips during use in a gas turbine engine.

Method 10 includes steps 12-24, and initially involves cleaning the ID surface of the stator inner shroud (step 12). During operation, gas turbine engine components are exposed to extreme temperatures. Operating at such high temperatures in an oxygen-containing atmosphere results in the formation of an oxide layer on the surfaces of the components. The oxide layer may be removed by cleaning the ID surface with scale-removing treatment chemicals, such as hydrogen fluoride gas. The cleaning process is desirably continued for a sufficient duration to at least substantially remove the oxide layer from the ID surface adjacent the damaged region. The ID surface is then pre-machined (e.g., ground) to smooth the ID surface in and around the damaged region prior to the welding operation (step 14). In alternative embodiments, one or both of steps 12 and 14 may be omitted when such processing steps are not required.

The inner shroud is then placed in a working environment of a laser system (step 16), and successive portions of filler material are manually fed to the damaged region in the ID surface (step 18). Examples of suitable filler materials include any type of metal that may be melted with a laser beam and capable of forming a weld with the material of the ID surface (e.g., nickel). Examples of suitable filler materials include titanium, iron, nickel, cobalt, and alloys thereof. The filler material may be provided in a variety of media, such as filaments, wires, and rod stocks.

A laser beam is then generated to melt the filler material, thereby allowing the melted filler material to deposit at least partially within the damaged region (step 20). In contrast to welding techniques such as GTAW, laser welding allows a laser beam to be focused at a particular location (e.g., on a filler material). This reduces the amount of heat applied to the stator inner shroud, which correspondingly reduces the risk of distorting the ID surface. Additionally, manually manipulating the filler material to the laser beam allows a user to accurately deposit the melted filler material in irregular damaged regions of the ID surface.

As the melted filler material deposits in the damaged region in the ID surface, the filler material cools to fuse to the ID surface, thereby forming a weld at least partially within the damaged region (step 22). The cooling of the melted filler material in step 22 occurs rapidly after melting the filler material in step 20. An excess amount of filler material is desirably used to ensure the region is properly filled. When welding a damaged region in accordance with the invention, successive portions of filler material are fused to the ID surface and to previously fused portions of filler material in a parallel manner. Under this technique, multiple parallel, overlapping, bead paths of fused material are sequentially welded to fill the damaged region. Each pass consumes about 30% to about 50% of a previously welded pass, thereby increasing the strength of the resulting weld.

When the weld is formed in the damaged region, the stator inner shroud may be repositioned and steps 18, 20, and 22 may be repeated for each damaged region in the ID surface. After the weld is formed in each of the damaged regions, the welds are blended (i.e., smoothed down) to the original dimensions of the ID surface (step 24). The blending step may be performed in a variety of manners, such as machining (e.g., grinding), polishing, and combinations thereof. The dimensionally restored ID surface may then undergo post-processing steps before the stator vane assembly is ready for reinstallation into a gas turbine engine.

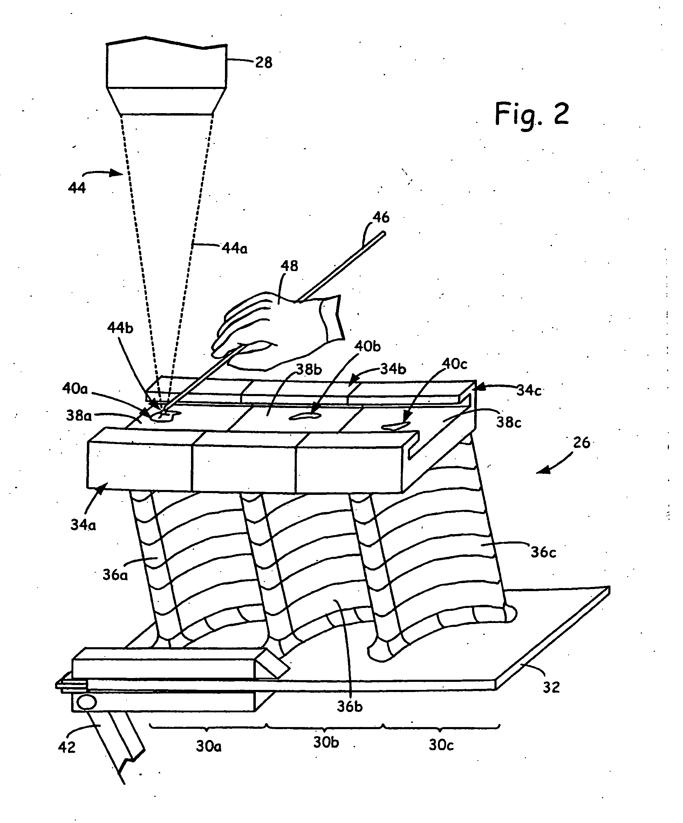

FIG. 2 is a perspective view of stator vane assembly 26 being dimensionally restored with laser system 28 pursuant to method 10 (shown in FIG. 1), where stator vane assembly 26 includes multiple stator inner shrouds. Stator vane assembly 26 is a small disassembled portion of an entire stator vane assembly, which has a full ring shape. An example of a suitable stator vane assembly that may be dimensionally restored with method 10 includes the assembly disclosed in Servadio et al., U.S. Patent No. 7,025,563, assigned to United Technologies Corporation.

Stator vane assembly 26 includes vane segments 30a-30c secured to outer shroud 32, where vane segments 30a-30c respectively include inner shrouds 34a-34c and airfoils 36a-36c. Inner shrouds 34a-34c are respectively secured to airfoils 36a-36c at opposing ends from outer shroud 32. As further shown, inner shrouds 34a-34c respectively include ID surfaces 38a-38c. When installed in a gas turbine engine (not shown), stator vane assembly 26 is positioned such that ID surfaces 38a-38c face toward a central axis of the engine and outer shroud 32 faces toward an outer housing of the engine.

Each of ID surfaces 38a-38c include damaged regions (referred to as damaged regions 40a-40c) incurred while stator vane assembly 26 was in use in the gas turbine engine. As shown, damaged regions 40a-40d have irregular shapes and are located at irregular locations in ID surfaces 38. Such regions are difficult to restore with automated systems. However, laser welding pursuant to method 10 is suitable for dimensionally restoring damaged regions 40a-40c despite the irregular shapes and locations.

Prior to placing stator vane assembly 26 within the working environment of laser system 28 (pursuant to step 16 of method 10), ID surfaces 38a-38c may be cleaned and pre-machined, pursuant to steps 12 and 14 of method 10. Stator vane assembly 26 is retained within the working environment of laser system 28 with support arm 42, which allows stator vane assembly 26 to be positioned below laser system 28 for initially restoring damaged region 40a in ID surface 38a. Laser system 28 is an industrial laser configured for laser welding metal parts with generated laser beam 44, where laser beam 44 includes converging portion 44a and focal point 44b. Thus, support arm 42 retains stator vane assembly 26 such that damaged region 40a is in a pathway of laser beam 44. Stator vane assembly 26 is desirably positioned relative to laser system 28 such that damaged region 40a is disposed at a location where focal point 44b of laser beam 44 will be generated.

When stator vane assembly 26 is properly positioned, a user then positions a portion of rod 46 above damaged region 40a via user hand 48 (pursuant to step 18 of method 10). Rod 46 is a stock rod of filler material, and may include one or more of the suitable filler materials discussed above. Laser beam 44 is then generated, pursuant to step 20 of method 10, which melts the portion of rod 46 that intersects laser beam 44. This allows the melted filler material of rod 46 to deposit into damaged region 40a.

While laser beam 44 is generated, successive portions of rod 46 are continuously fed to laser beam 44 by user hand 48, thereby melting additional amounts of filler material and allowing the additional amounts to deposit into damaged region 40a. As the melted filler material deposits into damaged region 40a, the filler material cools and fuses to the metal of ID surface 34a, thereby forming a weld in damaged region 40a (pursuant to step 22 of method 10).

When a weld is completely formed in the given damaged region 40, the user stops laser system 28 from generating laser beam 44, and repositions stator vane assembly 26 such that a second damaged portion (e.g., damaged portion 40b) is disposed below laser system 26. Steps 18, 20, and 22 of method 10 are then repeated to form a weld in damaged portion 40b. This is then repeated for each remaining damaged portion in stator cane assembly 26 (e.g., damaged portion 40c). Accordingly, method 10 is suitable for repairing multiple damaged portions (e.g., damaged portions 40a-40c) during a single welding session, thereby reducing the time required to dimensionally restore stator vane assemblies (e.g., stator vane assembly 26).

Moreover, because rod 46 is manually manipulated, damaged portions 40a-40c may be filled with filler material with high precision, and with a reduced risk of distorting inner shroud 30. As discussed above, pursuant to step 24 of method 10, after the laser welds are formed in damaged portions 40a-40c, the welds are blended down to their original surface dimensions, thereby dimensionally restoring inner shroud 30.

While stator vane assembly 26 is shown with three vane segments (i.e., vane segments 30a-30c), method 10 may be used to dimensionally restore inner shrouds of stator vane assemblies have different numbers of vane segments in a single laser welding session. The number of vane segments is generally determined by the size of the laser system working environment and the access of laser system 24. Examples of suitable numbers of vane segments that may be welded in a single welding session range from one vane segment to thirty vane segments, with particularly suitable numbers of vane segments ranging from one vane segment to ten vane segments.

In one embodiment, method 10 is performed with a laser system (e.g., laser system 28) that includes a laser safety system for protecting a user while manually feeding rod 46 to laser beam 44. Examples of suitable laser safety systems include systems that disable laser system 28 and laser beam 44 when hand 48 enters a nominal hazard zone of laser beam 44, such as those disclosed in U.S. Patent Application Serial No. 11/417,598, filed May 4, 2006, published as US 2007-0045250 A1 and entitled "Method for Manually Laser Welding Metallic Parts".

Although the present invention has been described with reference to preferred embodiments, workers skilled in the art will recognize that changes may be made in form and detail without departing from the scope of the invention.

## Claims

1. A method of restoring a stator inner shroud (34a - 34c), the method comprising:
manually feeding successive portions of a filler material (46) to a damaged region (40a - 40c) in a surface (38a - 38c) of the stator inner shroud (34a - 34c);
melting the manually fed successive portions of the filler material (46) with a laser beam (44); and
cooling the melted successive portions of the filler material (46) in the damaged region (40a - 40c), thereby allowing the melted successive portions to form a weld; the method **characterised in that** the filler material (46) is deposited in multiple parallel overlapping bead paths and sequentially welded to fill the damaged region, wherein each pass consumes about 30% to about 50% of a previously welded pass.

2. The method of claim 1, further comprising manually feeding the filler material (46) to a second damaged region (40a - 40c) in the surface of the stator inner shroud (34a - 34c).

3. The method of claim 1 or 2, further comprising at least one step selected from the group consisting of cleaning the surface (38a - 38c) of the stator inner shroud (34a - 34c) and pre-machining the surface (38a - 38c) of the stator inner shroud (34a - 34c).

4. The method of any preceding claim, further comprising blending down the weld.

5. The method of any preceding claim, wherein the filler material (46) is provided in a medium selected from the group consisting of filaments, wires, and rod stocks.

6. The method of any preceding claim, further comprising disabling the laser beam (44) when a hand of a user enters a nominal hazard zone of the laser beam (44).

7. The method of any preceding claim, wherein the surface (38a - 38c) of the stator inner shroud (34a - 34c) is an inner diameter surface of a stator vane assembly (26).

## Patentansprüche

1. Verfahren zum Wiederherstellen einer Statorkopfplatte (34a - 34c), wobei das Verfahren Folgendes umfasst:
manuelles Zuführen aufeinanderfolgender Teile eines Füllmaterials (46) zu einer beschädigten Region (40a - 40c) in einer Fläche (38a - 38c) der Statorkopfplatte (34a - 34c);
Schmelzen der manuell zugeführten aufeinanderfolgenden Teile des Füllmaterials (46) mit einem Laserstrahl (44); und
Kühlen der geschmolzenen aufeinanderfolgenden Teile des Füllmaterials (46) in der beschädigten Region (40a - 40c), wodurch die geschmolzenen aufeinanderfolgenden Teile eine Schweißstelle bilden können; wobei das Verfahren **dadurch gekennzeichnet ist, dass** das Füllmaterial (46) in mehreren parallelen einander überlagernden Schweißraupenwegen aufgebracht wird und nacheinander geschweißt wird, um die beschädigte Region zu füllen, wobei jede Lage etwa 30% bis etwa 50% einer vorhergehenden Schweißlage verbraucht.

2. Verfahren nach Anspruch 1, ferner umfassend manuelles Zuführen des Füllmaterials (46) zu einer zweiten beschädigten Region (40a - 40c) in der Fläche der Statorkopfplatte (34a - 34c).

3. Verfahren nach Anspruch 1 oder 2, ferner umfassend wenigstens einen Schritt, ausgewählt aus der Gruppe bestehend aus Reinigen der Fläche (38a - 38c) der Statorkopfplatte (34a - 34c) und Vorbearbeiten der Fläche (38a - 38c) der Statorkopfplatte (34a - 34c).

4. Verfahren nach einem der vorangehenden Ansprüche, ferner umfassend gründliches Verteilen der Schweißstelle.

5. Verfahren nach einem der vorangehenden Ansprüche, wobei das Füllmaterial (46) in einem Medium bereitgestellt wird, das ausgewählt wird aus der Gruppe bestehend aus Filamenten, Drähten und Stäben.

6. Verfahren nach einem der vorangehenden Ansprüche, ferner umfassend Deaktivieren des Laserstrahls (44), wenn eine Hand eines Benutzers in einen Nenngefahrenbereich des Laserstrahls (44) gelangt.

7. Verfahren nach einem der vorangehenden Ansprüche, wobei die Fläche (38a - 38c) der Statorkopfplatte (34a - 34c) eine Innendurchmesserfläche einer Leitschaufelbaugruppe (26) aufweist.

## Revendications

1. Procédé de restauration d'une virole intérieure de stator (34a-34c), le procédé comprenant:
l'amenée manuelle de parties successives d'un matériau de remplissage (46) à une région endommagée (40a-40c) dans une surface (38a-38c) de la virole intérieure de stator (34a-34c);
la fusion des parties successives amenées manuellement du matériau de remplissage (46) avec un faisceau laser (44); et
le refroidissement des parties successives fondues du matériau de remplissage (46) dans la région endommagée (40a-40c), permettant par là-même aux parties successives fondues de former une soudure; le procédé étant **caractérisé en ce que** le matériau de remplissage (46) est déposé dans de multiples voies nervurées à recouvrement parallèle et soudé de manière séquentielle pour remplir la région endommagée, dans lequel chaque passe utilise environ 30 à 50% d'une passe soudée précédemment.

2. Procédé selon la revendication 1, comprenant en outre l'amenée manuelle du matériau de remplissage (46) à une seconde région endommagée (40a-40c) dans la surface de la virole intérieure de stator (34a-34c).

3. Procédé selon la revendication 1 ou 2, comprenant en outre au moins une étape sélectionnée dans le groupe composé du nettoyage de la surface (38a-38c) de la virole intérieure de stator (34a-34c) et du préusinage de la surface (38a-38c) de la virole intérieure de stator (34a-34c).

4. Procédé selon l'une quelconque des revendications précédentes, comprenant en outre le mélange de la soudure.

5. Procédé selon l'une quelconque des revendications précédentes, dans lequel le matériau de remplissage (46) est prévu dans un support sélectionné dans le groupe composé de filaments, fils et barres rondes en acier.

6. Procédé selon l'une quelconque des revendications précédentes, comprenant en outre la désactivation du faisceau laser (44) lorsqu'une main d'un utilisateur entre dans une zone nominale dangereuse du faisceau laser (44).

7. Procédé selon l'une quelconque des revendications précédentes, dans lequel la surface (38a-38c) de la virole intérieure de stator (34a-34c) est une surface de diamètre intérieur d'un ensemble d'aube de stator (26).
